# EUROPÄISCHE PATENTSCHRIFT

(11) **EP 1 905 635 B1**
(45) Veröffentlichungstag und Bekanntmachung des Hinweises auf die Patenterteilung: **17.03.2010**
(21) Anmeldenummer: 07016235.9
(22) Anmeldetag: 18.08.2007
(51) Int. Cl.: B60K 37/06, B60R 11/02

(54) **Multifunktionsbedienvorrichtung und Verfahren zum Betreiben einer Multifunktionsbedienvorrichtung für ein Kraftfahrzeug mit einem verschiebbaren Bedienelement**
Multi-functional operating device and method for operating a multi-function operating device for a motor vehicle with a slidable operating element
Dispositif de commande multifonction et procédé de fonctionnement d'un dispositif de commande multifonction pour un véhicule automobile doté d'un élément de commande coulissant

(30) Priorität: 29.09.2006 DE 102006046325
(43) Veröffentlichungstag der Anmeldung: 02.04.2008
(73) Patentinhaber: Volkswagen Aktiengesellschaft, 38436 Wolfsburg (DE)
(72) Erfinder: Wehling, Ulrike, 38104 Braunschweig (DE); Medler, Andreas, 38268 Lengede (DE); Pollex, Alf, 38300 Wolfenbüttel (DE); Han, Kyoung Sun, 10825 Berlin (DE); Michaelis, Jan, 10711 Berlin (DE); Hauschild, Frank, 10587 Berlin (DE)

(56) Entgegenhaltungen:
- EP-A- 1 640 852
- WO-A-99/06987
- JP-A- 2006 177 401
- US-B1- 7 084 859

## Beschreibung

Die Erfindung betrifft eine Multifunktionsbedienvorrichtung für ein Kraftfahrzeug, umfassend eine als Touchscreen ausgebildete Anzeigevorrichtung mit einer Anzeigefläche und einer mit der Anzeigefläche gekoppelten berührungsempfindlichen ortsauflösenden Sensoreinheit, wobei auf der Anzeigefläche grafische Elemente darstellbar sind, denen Aktionen und/oder Funktionen zugeordnet sind, die bei einer Betätigung der grafischen Elemente auslösbar sind, sowie ein Verfahren zum Betreiben einer solchen Multifunktionsbedienvorrichtung.

In modernen Kraftfahrzeugen werden Multifunktionsbedienvorrichtungen eingesetzt, die eine als Touchscreen ausgebildete Anzeigevorrichtung umfassen. Auf der Anzeigefläche der Multifunktionsbedienvorrichtung werden grafische Elemente dargestellt, die unterschiedliche Gestalt aufweisen können. Den grafischen Elementen sind Funktionen und/oder Aktionen zugeordnet, die bei einem Betätigen der grafischen Elemente ausgelöst werden oder ausgeführt werden. Ein Betätigen eines solchen grafischen Elements erfolgt, indem die berührungsempfindliche ortsauflösende Sensoreinheit von einem Betätigungsobjekt berührt wird. Als Betätigungsobjekt wird in der Regel ein Körperteil, insbesondere ein Finger, genutzt. Die berührungsempfindliche ortsauslösende Sensoreinheit ermittelt die Position, an der das Betätigungsobjekt den Touchscreen berührt. Liegt die ermittelte Position im Bereich der grafischen Darstellung eines grafischen Elements, so wird die dem grafischen Element zugeordnete Funktion/Aktion ausgelöst oder ausgeführt. Der Begriff im Bereich der grafischen Darstellung bedeutet, dass die ermittelte Position, an der das Betätigungsobjekt den Touchscreen berührt hat, nicht notwendigerweise mit der Position eines Bildpunktes der grafischen Darstellung des grafischen Elements zusammenfallen muss, welches betätigt wird. In der Regel ist einem grafischen Element ein Auslösegebiet auf der Anzeigefläche zugeordnet. Liegt die ermittelte Position der Berührung des Betätigungsobjekts in dem Auslösegebiet, so wird die dem grafischen Element zugeordnete Funktion/Aktion ausgelöst oder ausgeführt. Eine flächige Ausdehnung und/oder Form des Auslösegebiets muss nicht mit der Form/Fläche des grafischen Elements übereinstimmen. In der Regel wird jedoch das Auslösegebiet eine ähnliche Form und flächige Ausdehnung wie das entsprechende grafische Element aufweisen.

Neben einer Auswahl von unterschiedlichen Funktionen über unterschiedliche grafische Elemente (Bedienelemente) gibt es ebenso Anwendungsfälle, in denen eine Funktion mit unterschiedlichen Parametern ausgelöst oder ausgeführt werden soll. Ein Aufrufen einer Funktion mit unterschiedlichen Parametern kann auch als ein Aufrufen von unterschiedlichen Funktionen oder Aktionen angesehen werden. Ein Beispiel für eine solche Funktion, die mit unterschiedlichen Parametern aufgerufen wird, ist z.B. das Einstellen eines Senders eines Autoradios. Hierbei ist die Frequenz bzw. die Auswahl eines Senders derjenige Parameter, mit dem die Funktion Empfangen und Wiedergeben eines Radioprogramms aufgerufen wird.

Bei den bekannten Multifunktionsbedienvorrichtungen erfolgt die Auswahl des Senders bzw. der Senderfrequenz häufig über einen automatisierten Sendersuchlauf, der durch das Betätigen eines Bedienelements ausgelöst wird. Bei einer Ausführung des automatischen Sendersuchlaufs wird die Sendefrequenz kontinuierlich erhöht'(erniedrigt), bis ein Rundfunksignal empfangen wird. Anschließend wird das entsprechende Rundfunksignal akustisch wiedergegeben und, sofern vorhanden, eine Stationskennung aus dem empfangenen Signal extrahiert und grafisch auf der Multifunktionsbedienvorrichtung dargestellt. Handelt es sich bei dem empfangenen Sendesignal um ein digitales Sendesignal, so wird einer von mehreren in den Sendesignal codierten Audiodatenströme wiedergegeben. Nachdem ein Rundfunkprogramm aufgefunden worden ist, bricht der automatische Sendesuchvorgang in der Regel ab. Er kann durch ein erneutes Betätigen eines Bedienelements erneut in Gang gesetzt werden. Sind in einem digitalen Sendesignal mehrere Rundfunkprogramme codiert, so wird beim erneuten Starten des Sendersuchvorgangs vor einem Ändern der Empfangsfrequenz ein nächstes codiertes Rundfunkprogramm akustisch und/oder visuell angezeigt und/oder ausgegeben. Erst wenn alle in dem Sendedatenstrom codierten Rundfunkprogramme ausgegeben und/oder angezeigt wurden, wird die Empfangsfrequenz verändert. Ein Einstellen und/oder Auffinden eines Rundfunkprogramms ist zeitaufwendig und kompliziert, wenn in einem Frequenzbereich zwischen einer aktuellen Empfangsfrequenz und einer gewünschten Zielempfangsfrequenz eine Vielzahl von Rundfunkprogrammen ausgestrahlt wird.

Daher ist bei vielen Multifunktionsbedienvorrichtungen vorgesehen, dass eine Programmauswahl manuell erfolgen kann. Hierzu wird beispielsweise ein als Pfeiltaste ausgebildetes Bedienelement betätigt. Solange die Betätigungshandlung andauert, wird die Empfangsfrequenz und gegebenenfalls die Programmauswahl aus einem codierten Datenstrom kontinuierlich fortgesetzt, bis die Betätigungshandlung abgebrochen wird.

Um eine zügige Empfangsfrequenzänderung zu gewährleisten, erfolgt die Frequenzänderung bzw. das Ändern einer Auswahl eines in einem Datenstrom codierten Programms mit einer recht hohen "Geschwindigkeit". Hierdurch ist es häufig nicht möglich, die Betätigungshandlung genau zu dem Zeitpunkt zu beenden, zu dem der gewünschte Sender ausgewählt ist. Eine manuelle Auslösung einer Sendersuche in entgegengesetzter Richtung (d.h. mit einer Erniedrigung der Sendefrequenz) ist daher häufig notwendig.

Aus der US 7,084,859 B1 sind ein Verfahren und eine Vorrichtung nach den Oberbegriffen von Anspruch 1 und Anspruch 6 bekannt, mit denen eine sichere Bedienung in einem Kraftfahrzeug ermöglicht werden soll. Beschreiben ist die Verwendung eines taktilen Touchscreen. Hierbei ist beispielhaft eine Einstellung einer Temperatur über einen virtuellen Schieberegler beschreiben, der mittels eines Betätigungselements entlang einer Skala verschoben werden kann.

EP 1 640 852 A1 beschreibt eine Eingabevorrichtung mit einem Touchscreen, welche eine Zeit, in der ein Finger kontinuierlich mit dem Tochscreen in Berührung ist, eine Anzahl von Berührungen und Zeitintervalle zwischen Berührungen auswertet, um Nutzereingaben zu erfassen.

WO 99/06987 beschreibt ein Bediensystem, bei dem über ein Verschieben von verschiedenen grafischen Elementen einzelne Aktoren ein Fahrzeugsystemen, beispielsweise Fensterheber, angesteuert werden können.

JP 2006 177401 A beschreibt ein System, bei dem eine Fahrstufenwahl eines Getriebes über eine gleitende Bewegung eines Fingers vornehmbar ist.

Der Erfindung liegt die technische Aufgabe zugrunde, eine Multifunktionsbedienvorrichtung und ein Verfahren zum Betreiben einer solchen Multifunktionsbedienvorrichtung zu schaffen, mit denen eine intuitivere und einfachere Bedienung von einem Autoradio zur Programmauswahl möglich ist.

Die technische Aufgabe wird erfindungsgemäß durch eine Multifunktionsbedienvorrichtung mit den Merkmalen des Patentanspruchs 1 sowie ein Verfahren zum Betreiben einer solchen Multifunktionsbedienvorrichtung mit den Merkmalen des Patentanspruchs 6 geschaffen. Vorteilhafte Ausgestaltungen der Erfindung ergeben sich aus den Unteransprüchen.

Erfindungsgemäß ist bei einer Multifunktionsbedienvorrichtung für ein Kraftfahrzeug umfassend eine als Touchscreen ausgebildete Anzeigevorrichtung mit einer Anzeigefläche und einer mit der Anzeigefläche gekoppelten berührungsempfindlichen ortsauflösenden Sensoreinheit, wobei auf der Anzeigefläche grafische Elemente darstellbar sind, denen Aktionen und/oder Funktionen zugeordnet sind, die bei einer Betätigung der grafischen Elemente auslösbar sind, vorgesehen, dass ein ausgezeichnetes grafisches Element der grafischen Elemente als verschiebbares Bedienelement ausgebildet ist, das mittels einer Berührung der berührungsempfindlichen ortsauflösenden Sensoreinheit im Bereich der grafischen Darstellung des ausgezeichneten grafischen Elements durch ein Betätigungsobjekt, insbesondere einen Finger, und eine anschließende gleitende Bewegung des Betätigungsobjekts über die Anzeigefläche, ohne die Berührung der Sensoreinheit zu unterbrechen, betätigbar ist, wobei die mit dem ausgezeichneten grafischen Element verknüpfte Funktion und/oder Aktion von der aktuellen Position des Betätigungsobjekts während der Betätigung oder von der letzten Position des Betätigungsobjekts während der Betätigung (d.h. der Position, an der die Berührung aufgegeben wird) abhängig ist. Hierdurch wird ein neuartiges Bedienelement für einen Touchscreen geschaffen, welches auf der Touchscreenoberfläche durch eine gleitende Bewegung des Betätigungsobjekts bewegbar ist. Ein verschiebbares Bedienelement wird auch als "Slider" bezeichnet. Den unterschiedlichen Positionen auf dem Touchscreen sind unterschiedliche Funktionen bzw. unterschiedliche Parameter einer Funktion zugeordnet. Dies bedeutet, dass durch die Betätigung unterschiedliche Funktionen bzw. eine Funktion mit unterschiedlichen Parametern ausgelöst und/oder ausgeführt werden kann. Das Ausführen einer Funktion mit unterschiedlichen Parametern kann im Sinne des hier beschriebenen mit dem Auswählen unterschiedlicher auswählbarer Funktionen gleichgesetzt werden. Wird das ausgezeichnete grafische Element beispielsweise vor einer als Werteskala ausgebildeten Darstellung auf der Anzeigefläche dargestellt, so ist es für einen Nutzer intuitiv einfach möglich, einen auf der Skala dargestellten Wert als Parameter für die mit dem ausgezeichneten grafischen Element verknüpfte Funktion auszuwählen, indem er das ausgezeichnete grafische Element an die Stelle auf der Anzeigevorrichtung bewegt, an der der entsprechende Parameterwert auf der dargestellten Skala abgebildet ist. Einem Nutzer wird hierdurch eine schnelle und präzise Auswahl eines solchen Parameters bzw. einer bestimmten Funktion ermöglicht. Hierdurch wird eine sehr viel intuitivere einfachere Bedienung möglich. Ferner ist es möglich, die Bewegung so auszuführen, dass sie in den Bereich, in dem die eigentliche Auswahl des Parameters bzw. der Funktion/Aktion erfolgt, mit einer geringeren Bewegungsgeschwindigkeit ausgeführt wird, als in einem Bereich, in dem der Position des ausgezeichneten grafischen Elements Parameterwerte zugeordnet sind, die weit entfern von dem gewünschten Parameter liegen.

Um eine klar strukturierte Darstellung zu erhalten, ist es gemäß der Erfindung vorgesehen, dass die grafische Darstellung des ausgezeichneten grafischen Elements Restriktionen unterliegt.

Gemäß der Erfindung ist vorgesehen, dass die grafische Darstellung zwar Restriktionen unterliegt, diese jedoch die grafische Darstellung nicht auf eine Bewegung in einer Dimension einschränken. So ist es vorgesehen, dass bei einem digitalen Rundfunkempfang, bei dem bei einer Sendefrequenz mehrere Programme in einem Datenstrom codiert sind, das ausgezeichnete grafische Element zum einen entlang einer ersten Richtung durch eine gleitende Bewegung bewegbar ist, über die die Sendefrequenz ausgewählt wird, und in einer zweiten, beispielsweise orthogonalen, Richtung durch die gleitende Betätigung in der zweiten Richtung bewegbar ist, um bei unterschiedlichen in dem Datenstrom bei einer Sendefrequenz codierten Programmen eine Auswahl zu treffen. So kann es beispielsweise vorgesehen sein, dass die Bewegung in der zweiten Richtung bzw. eine Projektion der Bewegung des Betätigungsobjekts in die zweite Richtung nur an den Stellen ausgewertet und zulässig ist, an denen mehrere Programme in einem Sendedatenstrom codiert sind.

Ein Verfahren zum Betreiben einer solchen erfindungsgemäßen Multifunktionsbedienvorrichtung für ein Kraftfahrzeug, umfassend eine als Touchscreen ausgebildete Anzeigevorrichtung mit einer Anzeigefläche und einer mit der Anzeigefläche gekoppelten berührungsempfindlichen ortsauflösenden Sensoreinheit, wobei auf der Anzeigefläche grafische Elemente dargestellt werden, denen Aktionen und/oder Funktionen zugeordnet sind, die bei einer Betätigung der grafischen Elemente ausgelöst und/oder ausgeführt werden, ist erfindungsgemäß folglich so ausgebildet, dass ein ausgezeichnetes grafisches Element der grafischen Elemente als verschiebbares Bedienelement ausgebildet ist, für dessen Betätigung eine Berührung der berührungsempfindlichen ortsauflösenden Sensoreinheit im Bereich der grafischen Darstellung des ausgezeichneten grafischen Elements durch ein Betätigungsobjekt, insbesondere einen Finger, und eine anschließende gleitende Bewegung des Betätigungsobjekts über die Anzeigefläche, ohne die Berührung der Sensoreinheit zu unterbrechen, erfasst wird, wobei jeweils eine aktuelle Position des Betätigungsobjekts ermittelt wird und die mit dem ausgezeichneten grafischen Element verknüpfte Funktion und/oder Aktion von der aktuellen Position des Betätigungsobjekts während der Betätigung oder von der letzten aktuellen Position des Betätigungsobjekts während der Betätigung (d.h. der Position, an der die Berührung aufgegeben wird) abhängig ist. Hierfür ist beispielsweise vorgesehen, dass das Betätigungsverfahren den Touchscreen auf Berührhandlungen des Betätigungsobjekts überwacht. Wird eine Betätigungshandlung festgestellt, so wird die Position der Berührhandlung ermittelt. Liegt sie im Bereich der Darstellung des ausgezeichneten grafischen Elements, so wird ermittelt, ob sich die Position des betätigenden Objekts (Betätigungsobjekts) auf dem Touchscreen verändert. Hierzu wird kontinuierlich die ermittelte Berührposition des betätigenden Objekts ermittelt und ausgewertet. Findet eine Positionsänderung des betätigenden Objekts auf dem Touchscreen statt, so wird dies als Bedienhandlung des ausgezeichneten grafischen Elements interpretiert. Hierbei wird vorausgesetzt, dass die Änderung der Position des betätigenden Objekts auf dem Touchscreen stetig ist, d.h. jeweils zu einer benachbarten Position zu der vorausgehend ermittelten Position erfolgt. Hierdurch können Zweitberührhandlungen durch ein weiteres betätigendes Objekt unterschieden werden.

Erfindungsgemäß wird die grafische Darstellung des ausgezeichneten grafischen Elements während der Betätigung unter Berücksichtigung von Restriktionen gekoppelt an die Position des Betätigungsobjekts während der Betätigung angepasst, wobei die aktuelle Position des Betätigungsobjekts entlang einer ersten Richtung ausgewertet wird und die grafische Darstellung des ausgezeichneten grafischen Elements abhängig von aktuelle Position des Betätigungsobjekts entlang der ersten Richtung angepasst wird und zumindest an einer Stelle entlang der ersten Richtung die aktuelle Position des Betätigungselements zusätzlich entlang einer zweiten, von der ersten Richtung verschiedenen Richtung ausgewertet und das ausgezeichnete grafischen Element gegebenenfalls entsprechend entlang der zweiten Richtung bewegt wird.

Bei einer besonders bevorzugten Ausführungsform der Multifunktionsbedienvorrichtung ist vorgesehen, dass die dem ausgezeichneten grafischen Element zugeordnete Funktion und/oder Aktion ein Auswählen eines Wertes aus einem Wertebereich umfasst. Bezogen auf das oben erwähnte Beispiel, bei der das ausgezeichnete grafische Element verwendet werden soll, um eine Empfangsfrequenz für ein Autoradio auszuwählen, wird die Senderfrequenz aus einem vorgegebenen Frequenzbereich durch ein Bewegen des ausgezeichneten grafischen Elements über eine dargestellte Werteskala ausgewählt und an die entsprechende Empfangseinheit des Autoradios übermittelt, um einen Empfang des bei der ausgewählten Sendefrequenz übertragenen Programms zu veranlassen.

Die Intuition der Bedienung wird bei einer Ausführungsform weiter verbessert, bei der die grafische Darstellung des ausgezeichneten grafischen Elements gekoppelt an die Position des Betätigungsobjekts während der Betätigung angepasst wird. Hierbei ist vorgesehen, dass das ausgezeichnete grafische Element sich gekoppelt mit der Bewegung des Betätigungsobjekts auf der Anzeigefläche bewegt.

Eine Auswertung der gleitenden Betätigung des ausgezeichneten grafischen Elements wird bei einer Ausführungsform deutlich erleichtert, bei der die Werte des Wertebereichs der geraden Strecke über einen funktionellen Zusammenhang, insbesondere einen linearen oder logarithmischen Zusammenhang zugeordnet sind.

Damit während einer Änderung der Empfangsfrequenz eines Autoradios nicht Programmfragmente akustisch und/oder optisch wiedergegeben werden, die bei Sendefrequenzen übertragen werden, die zwischen der Frequenz, die zum Zeitpunkts des Beginns der Betätigungshandlung von dem Autoradio empfangen wird, und einer Zielfrequenz übertragen werden, ist bei einer besonders bevorzugten Ausführungsform der Erfindung vorgesehen, dass die mit dem ausgezeichneten grafischen Element verknüpfte Funktion und/oder Aktion erst mit oder nach dem Beenden der Betätigung des ausgezeichneten grafischen Elements ausgelöst und/oder ausgeführt wird. Hierdurch wird erreicht, dass erst zeitgleich mit dem Beenden oder sogar zeitverzögert nach dem Beenden die mit der Position verknüpfte Funktion am Ende der Betätigungshandlung ausgelöst wird.

Andere Ausführungsformen können genau den gegenteiligen Effekt vorteilhaft nutzen und daher vorsehen, dass die mit dem ausgezeichneten grafischen Element verknüpfte Funktion und/oder Aktion während der Betätigung jeweils abhängig von der aktuellen Position des Betätigungsobjekts ausgelöst und/oder ausgeführt wird. Hierdurch wird es beispielsweise möglich, akustisch oder optisch angezeigte Informationen eines empfangenen Rundfunkprogramms auf der Anzeigevorrichtung oder über ein akustisches Wiedergabesystem als Nutzer wahrzunehmen und so eine Auswahl über das gewünschte Rundfunkprogramm, welches empfangen werden soll, auszuführen.

Die Merkmale des erfindungsgemäßen Betriebsverfahrens weisen dieselben Vorteile wie die entsprechenden Merkmale der Multifunktionsbedienvorrichtung auf.

Nachfolgend wird die Erfindung anhand eines bevorzugten Ausführungsbeispiels unter Bezugnahme auf eine Zeichnung näher erläutert. Die einzelnen Figuren der Zeichnung zeigen:
- Fig. 1: eine Darstellung einer Multifunktionsbedienvorrichtung zum Bedienen eines Autoradios; und
- Fig. 2: ein Ablaufdiagramm einer Ausführungsform eines Verfahrens zum Betreiben einer Multifunktionsbedienvörrichtung.

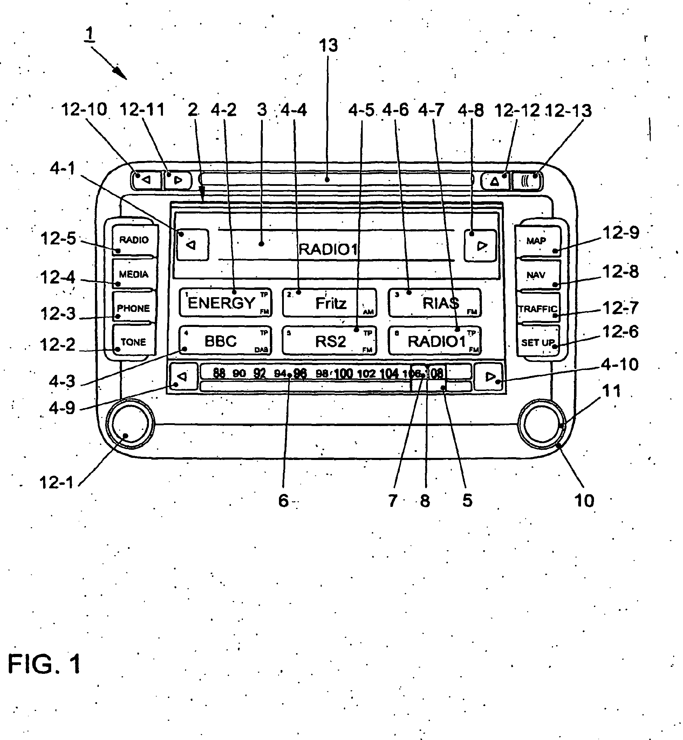

In Fig. 1 ist eine Multifunktionsbedienvorrichtung 1 schematisch dargestellt. Die Multifunktionsbedienvorrichtung 1 umfasst eine als Touchscreen ausgebildete Anzeigevorrichtung 2. Die Anzeigevorrichtung 2 umfasst eine Anzeigefläche 3 und eine hiervor angeordnete berührungsempfindliche ortsauflösende Sensoreinheit (nicht dargestellt). Die Sensoreinheit kann integral mit der Anzeigefläche ausgebildet sein. Auf der Anzeigefläche 3 sind grafische Elemente 4-1 bis 4-10 und ein ausgezeichnetes grafisches Element 5 dargestellt, denen Funktionen und/oder Aktionen zugeordnet sind, die bei einem Betätigen der grafischen Elemente 4-1 bis 4-10 oder des ausgezeichneten grafischen Elements 5 ausgelöst und/oder ausgeführt werden. Auf der Anzeigefläche 3 ist zusätzlich eine Frequenzskala 6 dargestellt. Das ausgezeichnete grafische Element 5 umfasst einen transparenten Bereich 7, durch den hindurch Werte der Frequenzskala 6, die hinter dem ausgezeichneten grafischen Element dargestellt sind, sichtbar sind. Das ausgezeichnete grafische Element 5 umfasst ferner eine Zeigerspitze 8, die andeutet, welche Frequenz der Frequenzskala 6 ausgewählt ist. In einem visuellen Informationsfeld 9 ist der Name der Radiostation "Radio 1" angezeigt, der bei der ausgewählten Frequenz übertragen wird. Diese Frequenz ist ferner dem grafischen Element 4-7 zugeordnet. Eine Frequenzauswahl kann somit auch über ein Berühren des grafischen Elements 4-7 erreicht werden. Über die grafischen Element 4-1 (als Linkspfeil ausgebildeter Button) und 4-8 (als Rechtspfeil ausgebildeter Button) können die den grafischen Elementen 4-2 bis 4-7 fest zugeordneten Radiosender bzw. die zugehörigen Frequenzen ausgewählt werden. Um einen Sender einzustellen bzw. die Frequenz, bei der ein anderer Sender ein Radioprogramm überträgt, wird vorteilhafterweise das ausgezeichnete Bedienelemente 5 mit einem Finger berührt und dieser entlang der Frequenzskala 6 so bewegt, dass der Finger, welcher als Betätigungsobjekt dient, gleitend über die als Touchscreen ausgebildete Anzeigevorrichtung 2 entlang der Frequenzskala 6 bewegt wird. Die grafische Darstellung des ausgezeichneten grafischen Elements 5 folgt hierbei vorzugsweise der Bewegung des Fingers über die Anzeigevorrichtung 2. Ferner wird einer Empfangseinrichtung des Autoradios, das über die Multifunktionsbedienvorrichtung 1 bedient wird, kontinuierlich die Frequenz als Empfangsfrequenz vorgegeben, die mit der aktuellen Position des Fingers bzw. des ausgezeichneten grafischen Elements 5 übereinstimmt. Alternativ kann vorgesehen sein, dass der Empfangseinrichtung des Radios eine neue Frequenz erst übermittelt wird und somit die Funktion "Empfange einen neuen Radiosender mit der übermittelten Frequenz" erst ausgelöst wird, wenn die Betätigungshandlung beendet ist, d.h. der Finger das ausgezeichnete Bedienelement bzw. eine berührungsempfindliche Ortsauflösende Sensoreinheit nicht mehr berührt.

Eine Darstellung des ausgezeichneten grafischen Elements 5 unterliegt Restriktionen in der Art, dass es lediglich vor der Frequenzskala 6 dargestellt werden kann und nur entlang dieser bewegt werden kann. Eine Bewegung des Betätigungsobjekts, die nicht parallel zu der Frequenzskala 6 verläuft, führt dazu, dass nur eine Projektion der Bewegung des Betätigungsobjekts auf die Frequenzskala verwendet wird, um das ausgezeichnete grafische Element zu bewegen. Alternativ zu der eben beschriebenen intuitiven Bedienung des ausgewählten grafischen Elements 5 können auch die grafischen Elemente 4-9 und 4-10, die als Linkspfeil bzw. Rechtspfeil ausgebildete Knöpfe sind, verwendet werden, um das ausgezeichnete grafische Element 5 zu bewegen und hierüber die Empfangsfrequenz des Autoradios. Ebenfalls alternativ kann ein in einer rechten unteren Ecke 10 angeordneter Drehdrückknopf 11 verwendet werden, um die Frequenz für die Empfangseinrichtung des Radios vorzugeben. Die grafische Darstellung des ausgezeichneten grafischen Elements folgt hierbei der Vorgabe, die an dem Drehdrückknopf 11 vorgegeben wird, so dass die Zeigerspitze 8 des ausgezeichneten grafischen Elements jeweils die aktuell vorgegebene Frequenz auf der Frequenzskala anzeigt.

Die Multifunktionsbedienvorrichtung kann weitere in Hardware ausgeführte Bedienelemente 12-1 bis 12-13 umfassen, mit denen in Abhängigkeit von einem Bedienkontext unterschiedliche Funktionen/Aktionen ausgelöst werden können. Beispielsweise werden die Bedienelemente 12-2 bis 12-9 verwendet, um einen Bedienkontext, beispielsweise zur Bedienung des Radios, zur Bedienung einer Navigationseinheit, zur Bedienung eines Mobiltelefons usw., vorzuwählen. Die Empfangseinheit des Autoradios kann beispielsweise in die Multifunkiionsbedienvörrichtung 1 ebenso wie ein Gerät zur Aufzeichnung und/oder Wiedergabe von Wechselmedien, die über einen Ein- und Ausgabeschlitz 13 in die Multifunktionsbedienvorrichtung ein- oder ausgebracht werden können, integriert sein.

Bei einer bevorzugten Ausführungsform ist vorgesehen, dass eine drückende Betätigung des Drehdrückknopfes 11 eine Umschaltung zwischen unterschiedlichen Empfangsarten und Frequenzbändern auslöst (AM-Empfang - amplitudenmodulierter Empfang, FM-Empfang - frequenzmodulierter Empfang, DAB-Empfang - Digital Audio Bordcasting Empfang).

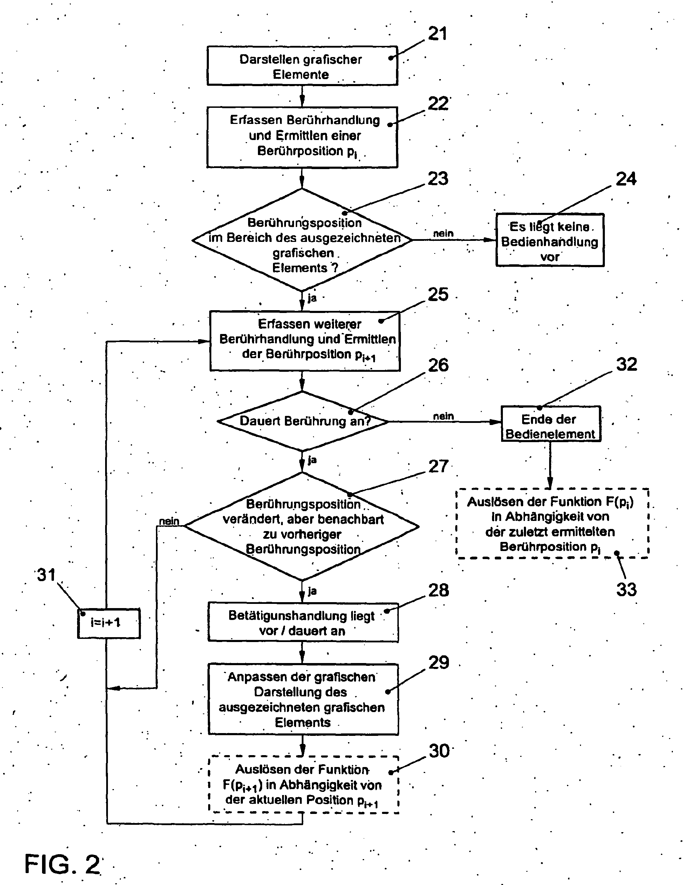

In Fig. 2 ist ein Ablaufdiagramm eines Verfahrens zum Betreiben einer Multifunktionsbedienvorrichtung schematisch dargestellt. Wie mittels eines Funktionsblocks 21 angedeutet ist, wird zunächst ein ausgezeichnetes grafisches Element auf der Anzeigefläche der Multifunktionsbedienvorrichtung dargestellt. Mittels der berührungsempfindlichen ortsauflösenden Sensoreinheit werden Berührhandlungen erfasst und jeweils eine aktuelle Position der Berührhandlung ausgegeben 22. Anschließend wird überprüft, ob die Position der Berührhandlung in einem Bereich liegt, in dem das ausgezeichnete grafische Element dargestellt ist 23. Ist dies nicht der Fall, so liegt keine Betätigung des ausgezeichneten grafischen Elements vor 24. Liegt die Berührposition im Bereich des ausgezeichneten grafischen Elements, werden zeitlich nachfolgende Berührhandlungen durch das Betätigungsobjekt, beispielsweise einen Finger, erfasst 25. Ergibt eine Abfrage 26, dass die Berührung durch das Betätigungsobjekt andauert, so wird überprüft, ob sich die Position des Betätigungsobjekts verändert hat und ob diese neue aktuelle Position in einem Bereich um die vorhergehend ermittelte aktuelle Position liegt 27. Ist dies der Fall, so liegt eine gleitende Berührung der Anzeigevorrichtung vor 28und somit eine Betätigung des ausgezeichneten grafischen Elements. Das ausgezeichnete grafische Element wird entsprechend der Positionsänderung des betätigenden Elements angepasst auf der Anzeigevorrichtung dargestellt 29. Hierbei werden Restriktionen berücksichtigt, die eine Bewegung des ausgezeichneten dargestellten Elements beschränken. Zusätzlich wird eine Funktion, beispielsweise das Einstellen einer Empfangseinheit auf eine neue Empfangsfrequenz, ausgelöst, wobei die Empfangsfrequenz durch eine vorzugsweise lineare Zuordnung von Sendefrequenzen zu einer Position des betätigenden Elements erfolgt 30. Das Erfassen und Auswerten der Berührhandlung erfolgt iterativ 31, bis keine Berührhandlung mehr vorliegt 32 und somit die Berührhandlung beendet ist. Bei einigen Ausführungsformen ist vorgesehen, dass die entsprechende Funktion, beispielsweise das Einstellen der Empfangseinheit auf eine neue Empfangsfrequenz, nicht kontinuierlich während der Betätigungshandlung ausgelöst wird, wie dieses in Funktionsblock 30 angedeutet ist, sondern erst am Ende oder nach dem Ende der Betätigungshandlung ausgelöst wird 33.

Dem Fachmann fallen weitere vorteilhafte Ergänzungen und Modifikationen des beschriebenen Verfahrens zum Betreiben der Multifunktionsbedienvorrichtung sowie der Multifunktionsbedienvorrichtung ein. Beispielsweise kann bei einer Ausführungsform vorgesehen sein, dass ein verschiebbares ausgezeichnetes grafisches Element zum Auswählen von einträgen einer Liste verwendet wird. Das ausgezeichnete grafische Element kann bei einer solchen Ausführungsform so ausgestaltet sein, dass es jeweils einen Eintrag der Liste visuell hervorhebt, wenn es über den entsprechenden Eintrag "geschoben" wird.

Da das ausgezeichnete grafische Element beim Bedienen über die Anzeigefläche gleitet, wird das grafische Element auch als "Slider" bezeichnet.

### Bezugszeichenliste

- 1: Multifunktionsbedienvorrichtung
- 2: Anzeigevorrichtung
- 3: Anzeigefläche
- 4-1 bis 4-10: grafische Elemente
- 5: ausgezeichnetes grafisches Element
- 6: Frequenzskala
- 7: transparenter Bereich
- 8: Zeigerspitze
- 9: visuelles Informationsfeld
- 10: rechte untere Ecke
- 11: Dreh- oder Dreh-Drück-Knopf
- 12-1 bis 12-13: Ein-/Ausgabeschlitz
- 13: Bedienelemente
- 21 bis 33: Verfahrensschritte eines Verfahrens zum Betreiben einer Multifunktionsbedienvorrichtung

## Patentansprüche

1. Multifunktionsbedienvorrichtung (1) für ein Kraftfahrzeug umfassend eine als Touchscreen ausgebildeten Anzeigevorrichtung (2) mit einer Anzeigefläche (3) und einer mit der Anzeigefläche gekoppelten berührungsempfindlichen ortsauflösenden Sensoreinheit, wobei auf der Anzeigefläche (3) grafische Elemente (4-1 bis 4-10, 5) darstellbar sind, denen Aktionen und/oder Funktionen zugeordnet sind, die bei einer Betätigung der grafischen Elemente (4-1 bis 4-10, 5) auslösbar sind,
ein ausgezeichnetes grafisches Element (5) der grafischen Elemente (4-1 bis 4-10, 5) als verschiebbares Bedienelement ausgebildet ist, das mittels einer Berührung der berührungsempfindlichen ortsauflösenden Sensoreinheit im Bereich der grafischen Darstellung des ausgezeichneten grafischen Elements (5) durch ein Betätigungsobjekt und eine anschließende gleitende Bewegung des Betätigungsobjekts über die Anzeigefläche, ohne die Berührung der Sensoreinheit zu unterbrechen, betätigbar ist, wobei die mit dem ausgezeichneten grafischen Element (5) verknüpfte Funktion und/oder Aktion von der aktuellen Position des Betätigungsobjekts während der Betätigung oder von der letzten Position des Betätigungsobjekts während der Betätigung abhängig ist,
**dadurch gekennzeichnet, dass**
die grafische Darstellung des ausgezeichneten grafischen Elements (5) Restriktionen unterliegt und das ausgezeichnete grafische Element entlang einer ersten Richtung bewegbar ist und zumindest an einer Stelle entlang der ersten Richtung zusätzlich entlang einer zweiten, von der ersten Richtung verschiedenen Richtung bewegbar ist, wobei entlang der ersten Richtung eine Sendefrequenz eines zu empfangenden Datenstroms und entlang der zweiten Richtung die bei einer der Sendefrequenzen übertragenen verschiedenen Programme auswählbar sind.

2. Multifunktionsbedienvorrichtung (1) nach einem der genannten Ansprüche, **dadurch gekennzeichnet, dass** die grafische Darstellung des ausgezeichneten grafischen Elements (5) gekoppelt an die Position des Betätigungsobjekts während der Betätigung angepasst wird.

3. Multifunktionsbedienvorrichtung (1) nach einem der genannten Ansprüche, **dadurch gekennzeichnet, dass** die Sendefrequenzen Positionen entlang der ersten Richtung über einen funktionellen Zusammenhang zugeordnet sind.

4. Multifunktionsbedienvorrichtung (1) nach einem der genannten Ansprüche, **dadurch gekennzeichnet, dass** die mit dem ausgezeichneten grafischen Element (5) verknüpfte Funktion und/oder Aktion erst mit oder nach dem Beenden der Betätigung des ausgezeichneten grafischen Elements ausgelöst und/oder ausgeführt wird.

5. Multifunktionsbedienvorrichtung (1) nach einem der Ansprüche 1 bis 3, **dadurch gekennzeichnet, dass** die mit dem ausgezeichneten grafischen Element (5) verknüpfte Funktion und/oder Aktion während der Betätigung jeweils abhängig von der aktuellen Position des Betätigungsobjekts ausgelöst und/oder ausgeführt wird.

6. Verfahren zum Betreiben einer Multifunktionsbedienvorrichtung (1) für ein Kraftfahrzeug umfassend eine als Touchscreen ausgebildeten Anzeigevorrichtung (2) mit einer Anzeigefläche (3) und einer mit der Anzeigefläche (3) gekoppelten berührungsempfindlichen ortsauflösenden Sensoreinheit, wobei auf der Anzeigefläche (3) grafische Elemente (4-1 bis 4-10, 5) dargestellt werden, denen Aktionen und/oder Funktionen zugeordnet sind, die bei einer Betätigung der grafischen Elemente (4-1 bis 4-10, 5) ausgelöst oder ausgeführt werden,
ein ausgezeichnetes grafisches Element (5) der grafischen Elemente (4-1 bis 4-10, 5) als verschiebbares Bedienelement ausgebildet ist, für dessen Betätigung eine Berührung der berührungsempfindlichen ortsauflösenden Sensoreinheit im Bereich der grafischen Darstellung des ausgezeichneten grafischen Elements (5) durch ein Betätigungsobjekt und eine anschließende gleitende Bewegung des Betätigungsobjekts über die Anzeigefläche (3), ohne die Berührung der Sensoreinheit zu unterbrechen, erfasst wird, wobei jeweils eine aktuelle Position des Betätigungsobjekts ermittelt wird und die mit dem ausgezeichneten grafischen Element (5) verknüpfte Funktion und/oder Aktion von der aktuellen Position des Betätigungsobjekts während der Betätigung oder von der letzten aktuellen Position des Betätigungsobjekts während der Betätigung abhängig ist
**dadurch gekennzeichnet, dass**
die grafische Darstellung des ausgezeichneten grafischen Elements (5) während der Betätigung unter Berücksichtigung von Restriktionen gekoppelt an die Position des Betätigungsobjekts während der Betätigung angepasst wird, wobei die aktuelle Position des Betätigungsobjekts entlang einer ersten Richtung ausgewertet wird und die grafische Darstellung des ausgezeichneten grafischen Elements (5) abhängig von aktuelle Position des Betätigungsobjekts entlang der ersten Richtung angepasst wird und zumindest an einer Stelle entlang der ersten Richtung die aktuelle Position des Betätigungselements zusätzlich entlang einer zweiten, von der ersten Richtung verschiedenen Richtung ausgewertet und das ausgezeichnete grafischen Element (5) gegebenenfalls entsprechend entlang der zweiten Richtung bewegt wird, wobei entlang der ersten Richtung eine Sendefrequenz eines zu empfangenden Datenstroms und entlang der zweiten Richtung eines von verschiedenen Programmen, die bei einer Sendefrequenz übertragen werden, ausgewählt werden.

7. Verfahren nach Anspruch 6, **dadurch gekennzeichnet, dass** das Auswählen der Sendefrequenz und/oder des Programms durch die aktuelle Position oder die letzte aktuelle Position bestimmt wird.

8. Verfahren nach einem der Ansprüche 6 oder 7, **dadurch gekennzeichnet, dass** die Sendefrequenzen Positionen entlang der ersten Richtung über einen funktionellen Zusammenhang zugeordnet werden.

9. Verfahren nach einem der Ansprüche 6 bis 8, **dadurch gekennzeichnet, dass** die mit dem ausgezeichneten grafischen Element verknüpfte Funktion und/oder Aktion erst mit oder nach dem Beenden der Betätigung des ausgezeichneten grafischen Elements ausgelöst und/oder ausgeführt wird.

10. Verfahren nach einem der Ansprüche 6 bis 8, **dadurch gekennzeichnet, dass** die mit dem ausgezeichneten grafischen Element verknüpfte Funktion und/oder Aktion während der Betätigung jeweils abhängig von der aktuellen Position des Betätigungsobjekts ausgelöst und/oder ausgeführt wird.

## Claims

1. Multifunctional user apparatus (1) for a motor vehicle comprising a display apparatus (2), in the form of touch screen, with a display area (3) and a touch-sensitive spatial-resolution sensor unit which is coupled to the display area, wherein graphical elements (4-1 to 4-10, 5) can be shown on the display area (3) which have associated actions and/or functions which can be triggered when the graphical elements (4-1 to 4-10, 5) are operated,
a distinguished graphical element (5) from the graphical elements (4-1 to 4-10, 5) is in the form of a displaceable user element which can be operated by virtue of an operating object touching the touch-sensitive spatial-resolution sensor unit in the region of the graphical representation of the distinguished graphical element (5) and a subsequent sliding movement of the operating object over the display area without interrupting the touch on the sensor unit, wherein the function and/or action linked to the distinguished graphical element (5) is dependent on the current position of the operating object during operation or on the last position of the operating object during operation,
**characterized in that**
the graphical representation of the distinguished graphical element (5) is subject to restrictions and the distinguished graphical element can be moved in a first direction and, at least at a point in the first direction, additionally in a second direction which is different from the first direction, wherein in the first direction, it is possible to select a transmission frequency for a data stream which is to be received, and in the second direction, it is possible to select the different programs transmitted for one of the transmission frequencies.

2. Multifunctional user apparatus (1) according to the preceding claim, **characterized in that** the graphical representation of the distinguished graphical element (5) is adapted in a manner coupled to the position of the operating object during operation.

3. Multifunctional user apparatus (1) according to one of the preceding claims, **characterized in that** the transmission frequencies are associated with positions in the first direction by means of a functional correlation.

4. Multifunctional user apparatus (1) according to one of the preceding claims, **characterized in that** the function and/or action linked to the distinguished graphical element (5) is triggered and/or performed only upon or following termination of operation of the distinguished graphical element.

5. Multifunctional user apparatus (1) according to one of claims 1 to 3, **characterized in that** the function and/or action linked to the distinguished graphical element (5) is triggered and/or performed during operation in each case as a function of the current position of the operating object.

6. Method for operating a multifunctional user apparatus (1) for a motor vehicle comprising a display apparatus (2), in the form of a touch screen, with a display area (3) and a touch-sensitive spatial-resolution sensor unit coupled to the display area (3), wherein graphical elements (4-1 to 4-10, 5) are shown on the display area (3) which have associated actions and/or functions which are triggered or performed when the graphical elements (4-1 to 4-10, 5) are operated,
a distinguished graphical element (5) from the graphical elements (4-1 to 4-10, 5) is in the form of a displaceable user element, for whose operation a touch on the touch-sensitive spatial-resolution sensor unit in the region of the graphical representation of the distinguished graphical element (5) by an operating object and a subsequent sliding movement of the operating object over the display area (3) without interrupting the touch on the sensor unit are detected, wherein a respective current position of the operating object is ascertained and the function and/or action linked to the distinguished graphical element (5) is dependent on the current position of the operating object during operation or on the last current position of the operating object during operation,
**characterized in that**
the graphical representation of the distinguished graphical element (5) is adapted, during operation, in a manner coupled to the position of the operating object during operation taking account of the restrictions, wherein the current position of the operating object in a first direction is evaluated and the graphical representation of the distinguished graphical element (5) is adapted on the basis of the current position of the operating object in the first direction and, at least at a point in the first direction, the current position of the operating element is additionally evaluated in a second direction which is different from the first direction, and the distinguished graphical element (5) is possibly moved as appropriate in the second direction, wherein in the first direction, a transmission frequency for a data stream which is to be received is selected, and in the second direction, one of various programs which are transmitted at a transmission frequency is selected.

7. Method according to Claim 6, **characterized in that** the selection of the transmission frequency and/or the program is determined by the current position or the last current position.

8. Method according to one of Claims 6 and 7, **characterized in that** the transmission frequencies are assigned to positions in the first direction by means of a functional correlation.

9. Method according to one of Claims 6 to 8, **characterized in that** the function and/or action linked to the distinguished graphical element is triggered and/or performed only upon or following termination of operation of the distinguished graphical element.

10. Method according to one of Claims 6 to 8, **characterized in that** the function and/ox action linked to the distinguished graphical element is triggered and/or performed during operation in each case on the basis of the current position of the operating object.

## Revendications

1. Dispositif de commande multifonction (1) pour un véhicule automobile comprenant un dispositif d'affichage (2) réalisé sous la forme d'un écran tactile et comprenant une surface d'affichage (3) et une unité de détection sensible au toucher et à résolution de la position qui est connectée à la surface d'affichage, des éléments graphiques (4-1 à 4-10, 5) pouvant être représentés sur la surface d'affichage (3), auxquels sont associées des actions et/ou des fonctions qui peuvent être déclenchées en actionnant les éléments graphiques (4-1 à 4-10, 5),
un élément graphique distinctif (5) parmi les éléments graphiques (4-1 à 4-10, 5) est réalisé sous la forme d'un élément de commande coulissant qui peut être actionné en effleurant l'unité de détection sensible au toucher et à résolution de la position dans la zone de la représentation graphique de l'élément graphique distinctif (5) avec un objet d'actionnement et en accomplissant ensuite un mouvement de glissement avec l'objet d'actionnement sur la surface d'affichage sans interrompre le contact avec l'unité de détection, la fonction et/ou l'action liée à l'élément graphique distinctif (5) dépendant de la position courante de l'objet d'actionnement pendant l'actionnement ou de la dernière position de l'objet d'actionnement pendant l'actionnement,
**caractérisé en ce que**
la représentation graphique de l'élément graphique distinctif (5) est soumise à des restrictions et l'élément graphique distinctif peut être déplacé dans une première direction et, au moins à un endroit le long de la première direction, peut être déplacé en plus dans une deuxième direction différente de la première direction, une fréquence d'émission d'un train de données à recevoir pouvant être sélectionnée le long de la première direction et les différents programmes transmis à l'une des fréquences d'émission pouvant être sélectionnés le long de la deuxième direction.

2. Dispositif de commande multifonction (1) selon la revendication précédente, **caractérisé en ce que** la représentation graphique de l'élément graphique distinctif (5) est adaptée en fonction de la position de l'objet d'actionnement pendant l'actionnement.

3. Dispositif de commande multifonction (1) selon l'une des revendications précédentes, **caractérisé en ce que** les positions le long de la première direction sont associées aux fréquences d'émission par le biais d'une relation fonctionnelle.

4. Dispositif de commande multifonction (1) selon l'une des revendications précédentes, **caractérisé en ce que** la fonction et/ou l'action liée à l'élément graphique distinctif (5) est seulement déclenchée et/ou accomplie au moment ou après la fin de l'actionnement de l'élément graphique distinctif.

5. Dispositif de commande multifonction (1) selon l'une des revendications 1 à 3, **caractérisé en ce que** la fonction et/ou l'action liée à l'élément graphique distinctif (5) est déclenchée et/ou accomplie pendant l'actionnement à chaque fois en fonction de la position courante de l'objet d'actionnement.

6. Procédé d'exploitation d'un dispositif de commande multifonction (1) pour un véhicule automobile comprenant un dispositif d'affichage (2) réalisé sous la forme d'un écran tactile et comprenant une surface d'affichage (3) et une unité de détection sensible au toucher et à résolution de la position qui est connectée à la surface d'affichage (3), des éléments graphiques (4-1 à 4-10, 5) étant représentés sur la surface d'affichage (3), auxquels sont associées des actions et/ou des fonctions qui sont déclenchées ou accomplies en actionnant les éléments graphiques (4-1 à 4-10, 5),
un élément graphique distinctif (5) parmi les éléments graphiques (4-1 à 4-10, 5) est réalisé sous la forme d'un élément de commande coulissant dont l'actionnement est réalisé en détectant un effleurement de l'unité de détection sensible au toucher et à résolution de la position dans la zone de la représentation graphique de l'élément graphique distinctif (5) avec un objet d'actionnement et ensuite un mouvement de glissement avec l'objet d'actionnement sur la surface d'affichage (3) sans interrompre le contact avec l'unité de détection, une position courante de l'objet d'actionnement étant à chaque fois déterminée et la fonction et/ou l'action liée à l'élément graphique distinctif (5) étant dépendante de la position courante de l'objet d'actionnement pendant l'actionnement ou de la dernière position courante de l'objet d'actionnement pendant l'actionnement,
**caractérisé en ce que**
la représentation graphique de l'élément graphique distinctif (5) est adaptée pendant l'actionnement en tenant compte des restrictions liées à la position de l'objet d'actionnement pendant l'actionnement, la position courante de l'objet d'actionnement étant interprétée dans une première direction et la représentation graphique de l'élément graphique distinctif (5) étant adaptée en fonction de la position courante de l'objet d'actionnement dans la première direction et la position courante de l'élément d'actionnement étant en plus interprétée le long d'une deuxième direction différente de la première direction à au moins un endroit le long de la première direction et l'élément graphique distinctif (5) étant éventuellement déplacé en conséquence dans la deuxième direction, une fréquence d'émission d'un train de données recevoir étant sélectionnée le long de la première direction et l'un parmi les différents programmes transmis à une fréquence d'émission pouvant être sélectionné le long de la deuxième direction.

7. Procédé selon la revendication 6, **caractérisé en ce que** la sélection de la fréquence d'émission et/ou du programme est déterminée par la position courante ou la dernière position courante.

8. Procédé selon la revendication 6 ou 7, **caractérisé en ce que** les positions le long de la première direction sont associées aux fréquences d'émission par le biais d'une relation fonctionnelle.

9. Procédé selon l'une des revendications 6 à 8, **caractérisé en ce que** la fonction et/ou l'action liée à l'élément graphique distinctif est seulement déclenchée et/ou accomplie au moment ou après la fin de l'actionnement de l'élément graphique distinctif.

10. Procédé selon l'une des revendications 6 à 8, **caractérisé en ce que** la fonction et/ou l'action liée à l'élément graphique distinctif est déclenchée et/ou accomplie pendant l'actionnement à chaque fois en fonction de la position courante de l'objet d'actionnement.
